Europäisches Patentamt

**European Patent Office**

**Office européen des brevets**

(11) Publication number: **0 123 396**
A2

# EUROPEAN PATENT APPLICATION

(21) Application number: **84301594.2**

(22) Date of filing: **09.03.84**

(51) Int. Cl.³: **G 02 B 7/26**

(30) Priority: **22.03.83 GB 8307850**

(43) Date of publication of application:
**31.10.84 Bulletin 84/44**

(84) Designated Contracting States:
**BE DE FR IT NL**

(71) Applicant: **The General Electric Company, p.l.c.**
**1 Stanhope Gate**
**London W1A 1EH(GB)**

(72) Inventor: **Arnold, Leslie John**
**97 Dalston Gardens**
**Stanmore Middlesex, HA7 1DA(GB)**

(74) Representative: **Kirby, Harold Victor Albert**
**Central Patent Department The General Electric**
**Company p.l.c. Hirst Research Centre East Lane**
**Wembley Middlesex HA9 7PP(GB)**

(54) **Fabricating couplers in fibres.**

(57) A method of fabricating couplers in optical fibres for example two fibres (5, 6) forming an X coupler, involves traversing a small flame along the coupling region (7) of the fibres in an oscillatory motion and simultaneously stretching and twisting the fibres to give a symmetrical and smooth biconical taper. The oscillatory motion is performed in such a way that the part of the fibres at the ends of the oscillatory stroke do not become hotter than that part at the centre of the stroke and so either the speed of the flame increases, or the flame moves away from the fibre, towards the ends of the stroke.

Fig . 2.

This invention relates to couplers for optical fibres and particularly to a method of fabricating such couplers.

Various different types of couplers between fibres are known and one coupler which gives a very low loss is the fused biconical coupler such as that described in "Low loss access coupler for multimode optical fibre distribution networks" by B.S. Kawasaki and K.O. Hill in "Applied Optics" Vol.16 No. 7, July 1977, or U.S. Patent No. 4291940.

In this example two fibres each consisting of a central core, a cladding layer surrounding the core and a protective coating, usually of plastics, have their coatings completely removed, in the region where coupling is to take place, and are laid longitudinally side by side and slightly twisted. An oxy-butane flame is applied so that the fibres start to fuse together and simultaneously they are stretched to give a symmetrical taper. By controlling the geometry of the taper, the amount of power coupled between the fibres can be fixed, the overall loss of the coupler being dependent mainly on the symmetry and smoothness of the taper.

This form of coupling has low loss but is difficult to fabricate reliably because even the smallest distortion of the core of a fibre, invisible under a low powered microscope, can cause a dramatic loss of power. Monomode fibres are particularly susceptible to this. These distortions can easily occur while the fibre is being heated in the way described above. The fibres have little rigidity and when they are heated they soften and so become still weaker. They bend and twist to relax any stresses that might be present and in particular they tend to be blown away by the flow of gases in the flame. In addition to the main gas flow there can be a lot of turbulence which may also cause distortion of the fibre.

In order to lessen these effects the gas flow has been reduced to a minimum, the orifice of the torch has been reduced and flow controllers have been introduced into the oxygen and butane gas supplies. However, with a much smaller flame the fibres are obviously heated over a shorter length and the resulting taper is very sharp which can lead to a high loss in the coupler. Couplers can also be constructed by forming a taper in a single fibre by the above technique, but this suffers from the same drawback.

According to one aspect, the invention provides a method of fabricating a coupler in at least one optical fibre comprising the steps of, traversing a flame along the coupling region of the fibre(s) in an oscillatory motion in such a way that the parts of the fibre(s) at either end of the oscillatory stroke do not become hotter than the part of the fibre(s) at the centre of the stroke, and simultaneously stretching the fibre(s) to give a symmetrical and smooth biconical taper in the or each fibre.

The invention also provides apparatus for fabricating a coupler in at least one optical fibre, comprising a pair of support blocks each having a longitudinal groove for supporting the fibre(s) such that the fibre coupling region is situated between said blocks, a pair of moving tables for clamping the part of the fibre(s) remote from the coupling region and movable away from said support blocks for stretching said fibre(s), a burner arranged to be supplied with a combustible gas or gas mixture to provide a flame for heating the fibre(s) at the coupling region, and means for traversing said burner, in use along the coupling region in an oscillatory motion such that it is moving faster at either end of its oscillatory stroke than at the centre of said stroke.

Preferably the period of oscillation is sufficiently short so that the fibre retains an almost constant temperature profile.

The oscillatory motion may be linear or it may be angular and is preferably produced by a cam but programmed stepping motors or free running motors continuously switched by microswitches may also be used.

One way of carrying out the method according to the invention will now be described as used on two fibres in the fabrication of an X coupler, with reference to the drawing in which :-

Figure 1 shows one example of a cam profile for controlling the oscillatory motion of the torch;

Figure 2 shows a schematic view of the coupler, and

Figure 3 shows a schematic diagram of apparatus used to form the coupler.

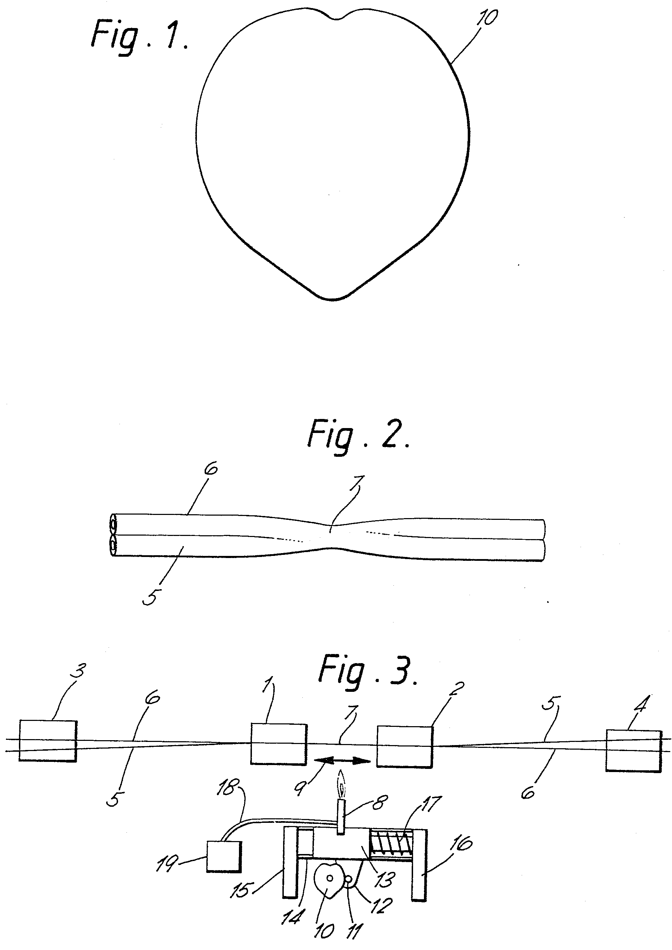

The two fibres 5 and 6 are first stripped of their coating, in the region 7 where the coupler is to be formed, and are then laid longitudinally side by side and slightly twisted within a wedge-shaped groove in support blocks 1 and 2 as shown in Figure 3. They are lightly clamped, so that they are able to move longitudinally. The blocks are inclined about the longitudinal groove direction at about $15^{\circ}$ to the horizontal each in the opposite sense to provide the twist to keep the fibres together. Both ends of the fibres are clamped on a respective moving table 3 and 4 each of which tables is connected to a mechanism for stretching the fibres in a smooth and controlled fashion, for example by means of a clamp connected to a micrometer screw. An oxy-butane flame which is as small as practicable is now directed on the twisted region of the fibres from a micro-torch 8 which is supplied from a gas supply 19 via a pipe 18 and which is mounted on a carriage 13 running on linear bearings 14 between two end blocks 15 and 16, in an oscillatory motion as shown by arrow 9 so that the flame is traversed along the fibre so that the fibres fuse together and the micrometer screws are simultaneously turned to stretch the fibres and form the coupler as shown in Figure 2. As shown in Figure 3, movement of the torch is effected by means of a rotating cam 10 designed such that its cam follower 11, mounted on an extension 12 of the carriage 13 and biased against the cam 10 by a spring 17, passes over the points of minimum and maximum radius, corresponding to the position of the flame at the ends of the stroke, as fast as possible, but causes the flame to pass relatively slowly over the midpoint region. A cam shaped as in Fig. 1 with a radius variation of 12 mm to 16 mm giving a stroke along the fibre or fibres of 4 mm was found most successful, but any cam shape which gives the desired effect can be used.

The torch may be traversed linearly along the fibres under the control of the cam, although it can alternatively be oscillated in an angular fashion to cause the flame to move along the length of the fibres in the described manner and away from them towards the end of the stroke.

The couplers may then be strain relieved by bonding to a glass or silica substrate and then encapsulated in a silicone resin, such as Sylgard 184.

-6-

This technique can also be used on a single fibre for producing a biconical taper so that signals may be tapped off at the taper, or on several fibres to couple them together. It is applicable to all fibre types, except plastic fibres.

CLAIMS

1.      A method of fabricating a coupler in at least one optical fibre (5, 6), comprising the steps of heating the coupling region (7) of the fibre or fibres by means of a flame and simultaneously stretching the fibre or fibres to give a symmetrical and smooth biconical taper in the or each fibre, characterised in that said flame is traversed along the coupling region of the fibre or fibres in an oscillatory motion (9) in such a way that the parts of the fibre or fibres at each end of the oscillatory stroke do not become hotter than the part of the fibre(s) at the centre of the stroke.

2.      A method of fabricating a coupler according to Claim 1 wherein the coupler is made in two or more optical fibres and the fibres are slightly twisted prior to traversing a flame along the coupling region.

3.      A method of fabricating a coupler according to any one of Claims 1 or 2 wherein said flame is provided by a micro-torch (8).

4.      A method of fabricating a coupler according to any preceding Claim wherein the period of oscillation is sufficiently short that the fibre(s) retains an almost constant temperature profile.

5.      A method of fabricating a coupler according to any preceding Claim wherein the oscillatory motion is linear or angular.

6.      A method of fabricating a coupler according to any preceding Claim wherein the oscillatory motion is provided by a cam (10).

7.      A method of fabricating a coupler according to any preceding Claim wherein the coupling region of the or each fibre is then bonded to a substrate and encapsulated in a silicone resin.

8.      Apparatus for fabricating a coupler in at least one optical fibre (5, 6), comprising a pair of support blocks (1, 2) each having a groove for supporting the fibre(s) such that the fibre coupling region (7) is arranged between said blocks, a pair of moving tables (3, 4) for clamping the part of the fibre(s) remote from the coupling region and movable away from the support blocks for stretching said fibre(s), a burner (8) arranged to be supplied with a combustible gas or gas mixture to provide a flame for heating the fibre(s) at the coupling region, and means (10-17) for transversing said burner, in use, along the coupling region in an oscillating motion such that it is moving faster at either end of its oscillatory stroke than at the centre of said stroke.

9.          Apparatus for fabricating a coupler according to Claim 9 wherein said support blocks are inclined to the horizontal about the longitudinal groove direction, each in the opposite sense, so as to provide, when in use for fabricating a coupler in two or more fibres, a twist to the fibres.

10.          Apparatus for fabricating a coupler according to any one of Claims 8 or 9 wherein said means for traversing said burner (8) comprises a cam (10) acting on a cam follower (11) carried by a carriage member (13) on which the burner is mounted, the carriage member being slidably supported for linear movement by guide means (14), and the cam being shaped to provide said oscillating motion.

Fig. 1.

Fig. 2.

Fig. 3.